# EUROPÄISCHE PATENTSCHRIFT

(11) **EP 2 094 533 B1**
(45) Veröffentlichungstag und Bekanntmachung des Hinweises auf die Patenterteilung: **20.04.2016**
(21) Anmeldenummer: 06818921.6
(22) Anmeldetag: 30.11.2006
(51) Int. Cl.: B60R 16/02, B62D 5/04, B62D 6/00

(54) **VERFAHREN UND BORDNETZ EINES KRAFTFAHRZEUGS MIT VORAUSSCHAUENDER TEMPORÄRER ERHÖHUNG DER LEERLAUFDREHZAHL DES VERBRENNUNGSMOTORS**
METHOD AND VEHICLE ELECTRIC SYSTEM FOR A MOTOR VEHICLE WITH A PRE-EMPTIVE TEMPORARY INCREASE IN THE IDLING SPEED OF THE INTERNAL COMBUSTION ENGINE
PROCÉDÉ ET RÉSEAU DE BORD POUR UN VÉHICULE À MOTEUR COMPRENANT UNE AMÉLIORATION TEMPORAIRE ANTICIPÉE DANS LA VITESSE DE RALENTI DU MOTEUR À COMBUSTION INTERNE

(43) Veröffentlichungstag der Anmeldung: 02.09.2009
(73) Patentinhaber: Bayerische Motoren Werke Aktiengesellschaft, 80809 München (DE)
(72) Erfinder: LEMKE, Olaf, 80995 München (DE); HAUSCHILD, Martin, 81249 München (DE)
(74) Vertreter: Grüter, Klaus Peter
(86) Internationale Anmeldenummer: PCT/EP2006/011480
(87) Internationale Veröffentlichungsnummer: WO 2008/064700

(56) Entgegenhaltungen:
- DE-A1- 10 216 184
- DE-A1- 10 252 292
- DE-A1- 19 931 144
- DE-A1-102004 003 019

## Beschreibung

Die Erfindung betrifft insbesondere ein Verfahren zur Reduzierung des Energieverbrauchs eines Kraftfahrzeugs mit einem Verbrennungsmotor und mit mindestens einem elektrischen Bordnetz an das mindestens ein erster elektrischer Verbraucher angeschlossen ist.

Die Anzahl der elektrischen Verbraucher in Kraftfahrzeugen hat erheblich zugenommen. Um den CO₂- Ausstoß der Fahrzeuge zu reduzieren, werden zunehmend hydraulisch arbeitende Verbraucher durch elektrische Verbraucher ersetzt. So ersetzt ggf. beispielsweise eine elektrische Lenkung (EPS) eine hydraulische Lenkung des Kraftfahrzeugs. Solche elektrischen Verbraucher können jedoch kurzzeitig eine hohe Leistungsanforderung an das Fahrzeugbordnetz stellen. Daraus resultiert auch eine hohe Anforderung an die Bordnetzstabilität des Kraftfahrzeugs. Insbesondere muss bei kurzzeitig auftretenden hohen Belastungen eine ausreichend hohe elektrische Spannung bzw. elektrische Leistung zur Verfügung stehen.

Aus der DE 199 31 144 A1 ist ein Verfahren zum Betreiben eines elektrischen Fahrzeug-Bordnetzes bekannt und beschäftigt sich mit der Aufgabe das Liegenbleiben eines Kraftfahrzeugs aufgrund einer zu weit entladenen Batterie zu vermeiden. Falls der Bordnetzzustand einen Grenzwert unterschreitet, wird zunächst die Leerlaufdrehzahl des Motors bis zur maximalen Leerlaufdrehzahl erhöht. Befindet sich nach der Drehzahlerhöhung das Bordnetz immer noch in einem kritischen Zustand, werden Verbraucher des Fahrzeugs in der umgekehrten Reihenfolge ihrer Priorität bis zur Erreichung des Grenzwerts abgeschaltet.

Die DE 10 2004 003019 A1 geht aus von einem Verfahren zur Warnung bzw. Beeinflussung eines Kraftfahrzeugführers und/oder zur Beeinflussung eines Kraftfahrzeugs, bei dem mittels einer Erkennungseinrichtung festgestellt wird, ob der Fahrzeugführer ausreichend fahrtüchtig ist. Falls Bedingungen vorliegen, die Hinweise auf eine Fahruntüchtigkeit ausreichend wahrscheinlich machen, wird der Kraftfahrzeugführer mittels einer Warneinrichtung gewarnt/gemahnt oder das Kraftfahrzeug zum Zwecke der Sicherheitserhöhung beeinflusst. Zur Reduzierung der Kosten zur Bereitstellung eines solchen Verfahrens wird vorgeschlagen, dass das Verfahren in einem elektronischen Bremsensteuergerät, insbesondere mit einer Fahrdynamikregelung, oder in einem anderen Steuergerät, das Zugriff auf die Signale des Bremsensteuergeräts hat, ausgeführt wird.

Aufgabe der Erfindung ist es, insbesondere ein Verfahren anzugeben, das die Realisierung eines leistungsfähigen Bordnetzes bei reduziertem Energieverbrauch eines Kraftfahrzeugs ermöglicht.

Diese Aufgabe wird durch ein Verfahren bzw. ein Bordnetz mit den Merkmalen des betreffenden unabhängigen Anspruchs gelöst. Vorteilhafte Ausgestaltungen der Erfindung sind Gegenstand der abhängigen Patentansprüche.

Ein Aspekt der Erfindung besteht darin, dass der Verbrennungsmotor in einem ersten Betriebszustand mit einer ersten Drehzahl betrieben wird. Beispielsweise versorgen der elektrische Generator des Fahrzeugs und die Batterie des Fahrzeugs das Bordnetz gemeinsam, um die elektrischen Verbraucher mit einer ausreichenden elektrischen Spannung zu versorgen. Der Generator kann in dem ersten Betriebszustand voll ausgelastet sein.

In einem zweiten Betriebszustand wird der Verbrennungsmotor mit einer zweiten gegenüber der ersten Drehzahl höheren Drehzahl betrieben.

Eine im Fahrzeug vorgesehene Fahrsituations-Erfassungseinrichtung erkennt eine weitgehend unmittelbar bevorstehende besondere Fahrsituation aufgrund des bisherigen Verhaltens des Fahrers beim Steuern des Fahrzeugs und/oder des Fahrzeugs im Voraus und veranlasst, dass die Verbrennungsmaschine vom ersten Betriebszustand in den zweiten Betriebszustand gebracht wird. Mit dem Erkennen einer weitgehend unmittelbar bevorstehenden besonderen Fahrsituation wird erfindungsgemäß also eine Erhöhung der Drehzahl des Verbrennungsmotors herbeigeführt, die der Stabilisierung der Bordnetzspannung dient, wenn diese in Kürze tatsächlich erforderlich wird. Eine erfindungsgemäße Erhöhung der Drehzahl kann insbesondere im Leerlaufbereich des Verbrennungsmotors von beispielsweise ca. 500 bis 1400 Umdrehungen pro Minute sinnvoll sein. Eine verbrauchsungünstige permanent höhere Drehzahl oder Leerlaufdrehzahl des Verbrennungsmotors, um eine plötzliche zusätzliche Belastung im Bordnetz ausgleichen zu können, kann durch die erfindungsgemäße Lösung vermieden werden.

Bei einer Ausgestaltung der Erfindung ist vorgesehen, dass die Fahrsituations-Erfassungseinrichtung beim Betrieb des Verbrennungsmotors im zweiten Betriebszustand dessen Drehzahl mit einer vorbestimmten Soll-Drehzahl vergleicht und bei Unterschreitung der Soll-Drehzahl veranlasst, dass die Drehzahl des Verbrennungsmotors mindestens auf die Soll-Drehzahl angehoben wird. Durch diese erfindungsgemäße Maßnahme kann einer sich ändernden Belastung des Bordnetzes begegnet und der Arbeitsbereich des elektrischen Generators in einen Bereich mit einem günstigeren Wirkungsgrad zurückgeführt werden.

Bei einer Ausführungsform der Erfindung ist vorgesehen, dass die Fahrsituations-Erfassungseinrichtung berücksichtigt, wer der aktuelle Fahrer ist und wie sein früheres Verhalten war. Hierdurch kann die Trefferquote für die Voraussage, dass ein Wendevorgang bevorsteht, erhöht werden. Erkennt die Fahrsituations-Erfassungseinrichtung beispielsweise, dass der betreffende Fahrer stets einen Schlenker vor einem Wendevorgang fährt, was nicht von allen Fahrern getan wird, kann dieses Kriterium im erfindungsgemäßen Algorithmus zur Erkennung eines Wendevorgangs höher gewichtet werden.

Erfindungsgemäß ist vorgesehen, dass der erste elektrische Verbraucher eine elektrisch betätigte Lenkung des Kraftfahrzeugs ist und die weitgehend unmittelbar bevorstehende besondere Fahrsituation ein Wendevorgang. Gerade bei einem Wendevorgang ist es für den Fahrer wichtig, dass sich das Verhalten der Lenkung nicht nachteilig verändert bzw. dass sie nicht schwergängig wird. Bei einem Wendevorgang ist der Leistungsbedarf einer elektrischen Lenkung besonders hoch.

Erfindungsgemäß ist vorgesehen, dass die Stellung des Fahr- bzw. Gaspedals von der Fahrsituations-Erfassungseinrichtung erfasst wird, und die Verbrennungsmaschine vom ersten Betriebszustand in den zweiten Betriebszustand gebracht wird, wenn sich das Fahrpedal bzw. Gaspedal weitgehend in seiner Ruhestellung befindet. Auch dies ist charakteristisch für einen bevorstehenden Wendevorgang und liefert ein wichtiges Indiz für einen bevorstehenden Wendevorgang.

Erfindungsgemäß ist vorgesehen, dass die Beschleunigung und die Geschwindigkeit des Fahrzeugs von der Fahrsituations-Erfassungseinrichtung erfasst wird, und die Verbrennungsmaschine vom ersten Betriebszustand in den zweiten Betriebszustand gebracht wird, wenn die Beschleunigung des Fahrzeugs negativ ist und die Geschwindigkeit einen vorbestimmten Schwellenwert unterschreitet. Auch dies ist charakteristisch für einen bevorstehenden Wendevorgang und liefert ein wichtiges Indiz für einen bevorstehenden Wendevorgang.

Bei einer bevorzugten Ausführungsform der Erfindung ist vorgesehen, dass die Fahrsituations-Erfassungseinrichtung überprüft, ob das Fahrzeug einen Schlenker fährt. Das Fahren eines Schlenkers kann einen recht deutlichen Hinweis auf einen bevorstehenden Wendevorgang geben.

Bei einer Ausgestaltung der Erfindung wird der Lenkwinkel der elektrischen Lenkung des Fahrzeugs von der Fahrsituations-Erfassungseinrichtung erfasst. Die Verbrennungsmaschine wird vom ersten Betriebszustand in den zweiten Betriebszustand gebracht, wenn der Absolutwert des Lenkwinkels größer als ein vorbestimmter Schwellenwert ist und mindestens eine weitere Fahrsituation eintritt. Dies kann ein Indiz dafür sein, dass der Fahrer beginnt, einen Schlenker bzw. ein Wendemanöver zu fahren.

Bei einer weiteren Ausgestaltung der Erfindung ist vorgesehen, dass der Lenkwinkel der elektrischen Lenkung des Fahrzeugs von der Fahrsituations-Erfassungseinrichtung erfasst und die Verbrennungsmaschine vom ersten Betriebszustand in den zweiten Betriebszustand gebracht wird, wenn der Absolutwert des Lenkwinkels größer als eine vorbestimmte geschwindigkeitsabhängige Lenkschwelle bzw. Lenkwinkelschwelle ist und mindestens eine weitere Fahrsituation eintritt, Fährt der Fahrer Keinen Schlenker vor einem Wendevorgang, kann dieses Charakteristikum eines bevorstehenden Wendevorgangs das "Schlenker-Kriterium" ersetzen und die Zuverlässigkeit der Voraussage eines bevorstehenden Wendevorgangs erhöhen.

Bei einer Weiterbildung der Erfindung ist vorgesehen, dass die Fahrsituations-Erfassungseinrichtung überprüft, ob der Bremsdruck höher als ein vorbestimmter Bremsdruck bzw. ein Toleranzdruck ist und zudem überprüft, ob die Geschwindigkeit kleiner als ein vorbestimmter beschleunigungsabhängiger Geschwindigkeitswert bzw. eine dynamische Wende-Schwelle ist. Hierdurch lässt sich die Zuverlässigkeit der Prädiktion eines Wendevorgangs weiter steigern.

Die Erfindung schlägt zudem ein Bordnetz eines Kraftfahrzeugs vor, das eine programmgesteuerte Fahrsituations-Erfassungseinrichtung aufweist, die ein erfindungsgemäßes Verfahren ausführt. Ferner wird eine programmgesteuerte Fahrsituations-Erfässungseinrichtung vorgeschlagen, die ein erfindungsgemäßes Verfahren ausführt oder deren Ausführung veranlasst.

Das erfindungsgemäße Verfahren wird nachfolgend anhand von Ablaufplänen am Beispiel eines Wendevorgangs näher erläutert. Gleiche Bezugszeichen zeigen gleiche oder gleich wirkende Funktionen. Es zeigen:
- Fig. 1: die Hauptfunktion 1 bzw. den ersten Teil des erfindungsgemäßen Verfahrens;
- Fig. 2: die Hauptfunktion 2 bzw. den zweiten Teil des erfindungsgemäßen Verfahrens;
- Fig. 3: die Hauptfunktion 3 bzw. den dritten Teil des erfindungsgemäßen Verfahrens;
- Fig. 4: die Unterfunktion "Lenkschwelle" des erfindungsgemäßen Verfahrens; und
- Fig. 5: die Unterfunktion "Dynamische Wendeschwelle".

Der Ausgangspunkt für das nachfolgende Ausführungsbeispiel des erfindungsgemäßen Verfahrens ist der Folgende. Das Kraftfahrzeug ist mit einer elektrischen Lenkung ausgestattet. Die elektrische Lenkung benötigt bei der Durchführung eines Wendemanövers bzw. eines Wendevorgangs eine ausreichend hohe elektrische Spannung, die eventuell selbst von der Kombination aus Batterie und elektrischem Generator des Kraftfahrzeugs, die beide bereits beispielsweise mit weitgehend maximaler Leistung in das Bordnetz einspeisen, nicht aufgebracht werden kann. Dies kann insbesondere im Winter der Fall sein, wenn die elektrische Sitzheizung und/oder weitere Verbraucher mit hoher elektrischer Anschlussleistung eingeschaltet sind. Wird ein Wendemanöver in einer solchen Situation ohne Gegenmaßnahmen eingeleitet, bricht die Spannung im Bordnetz durch die zusätzliche Last der elektrischen Lenkung deutlich ein, weil die Lenkung ein hohes mechanisches Drehmoment beim Wendevorgang bereitstellen muss, und die Lenkung wird schwergängig. Dies ist für den Fahrer, insbesondere bei einem schnell auszuführenden Wendemanöver, sehr unangenehm. Durch das erfindungsgemäße Verfahren wird das unmittelbare Bevorstehen eines Wendemanövers sehr zuverlässig erkannt. Die Spannung im elektrischen Bordnetz wird durch die verbrauchsgünstige nur temporäre Erhöhung der Leerlaufdrehzahl von kurz vor dem Wendemanöver bis kurz nach dem Wendemanöver stabilisiert.

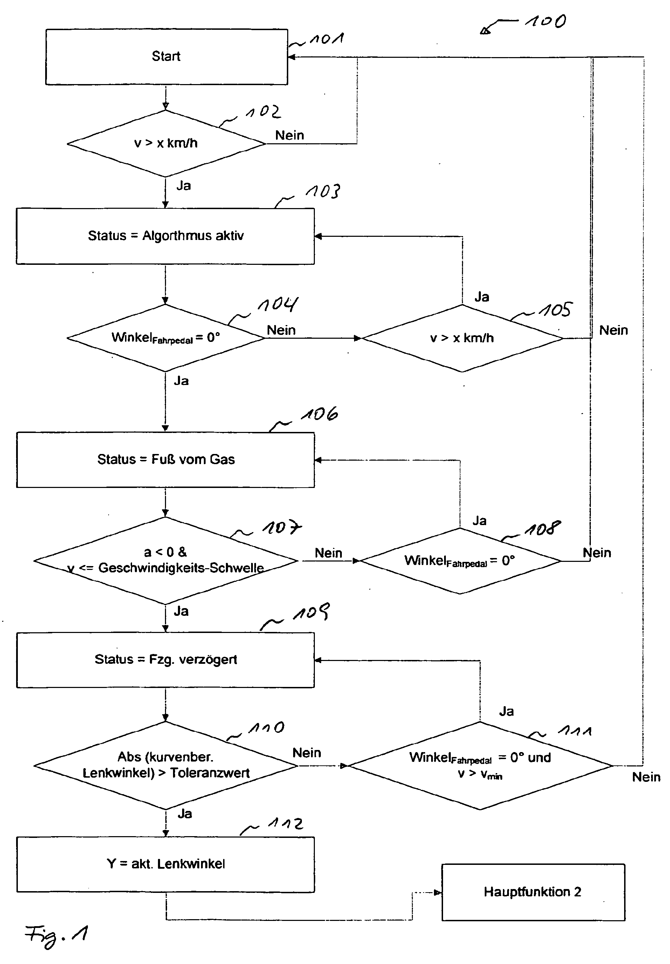

Figur 1 zeigt den ersten Teil 100 (Hauptfunktion 1) des erfindungsgemäßen Verfahrens zur Erkennung, ob das Kraftfahrzeug in Kürze ein Wendemanöver vornehmen wird. Im Schritt 101 beginnt das erfindungsgemäße Verfahren. Im Schritt 102 wird verglichen, ob das Fahrzeug eine vorbestimmte Geschwindigkeit x überschreitet. Falls nein, wird der Vergleich erneut ausgeführt. Falls ja, ist das erfindungsgemäße Verfahren zur Erkennung eines bevorstehenden Wendemanövers aktiv, wie im Status 103 dargestellt.

Im Schritt 104 wird verglichen, ob das Fahr- bzw. Gaspedal betätigt ist, d.h. ob der Winkel des Pedals 0 Grad (Ruhestellung) ist. Falls nein, wird im Schritt 105 überprüft, ob die Geschwindigkeit des Fahrzeugs größer als die vorbestimmte Geschwindigkeit x ist. Fall ja, wird der Schritt 104 erneut ausgeführt. Falls nein, beginnt das Verfahren erneut mit dem Schritt 101. Falls der Vergleich im Schritt 104 positiv verläuft, liegt der der Status "Fuß vom Gas" vor, wie im Status 106 angegeben.

Im Schritt 107 wird verglichen, ob die Beschleunigung des Fahrzeugs negativ ist (a<0) und ob die Geschwindigkeit kleiner als oder gleich einer vorbestimmten Geschwindigkeit ist (v<= Geschwindigkeitsschwelle). Falls nein, wird im Schritt 108 erneut die Stellung des Gaspedals erfasst. Ist das Gas- bzw. Fahrpedal nicht im Ruhezustand, beginnt das Verfahren ab dem Schritt 101. Ist das Gas- bzw. Fahrpedal nicht ausgelenkt bzw. betätigt, gilt dies als Status 106 und der Vergleich 107 läuft erneut ab. Ist das Ergebnis des Vergleichs 107 "ja", ist der Status des Fahrzeugs "Fahrzeug verzögert" (Status 109).

Unter dem nachfolgend verwendeten Begriff "kurvenbereinigter Lenkwinkel" ist folgendes zu verstehen. Bewegt sich das Fahrzeug auf einer geraden Strasse, so ist der Lenkwinkel bzw. die Stellung des Lenkrads 0 Grad, d.h. Geradeausfahrt. Fährt das Fahrzeug in einer Kurve, ist der Lenkwinkel verschieden von 0 Grad. Handelt es sich beispielsweise um eine gleichförmige Linkskurve, ist der Lenkwinkel für die Zeitdauer des Durchfahrens der gleichförmigen Linkskurve beispielsweise - 10 Grad. Um diese Form der Auslenkung des Lenkrads (kein bewusstes Lenken) von einem tatsächlichen Lenkvorgang (bewusster Lenkvorgang) auch im Fall einer Kurvenfahrt unterscheiden zu können, wird erfindungsgemäß ermittelt, wie groß der mittlere Lenkwinkel für einen zurückliegenden kurzen Zeitraum von beispielsweise 3 Sekunden war, und ermittelt, wie groß der Lenkwinkel aktuell ist. Dann wird die Differenz zwischen dem mittleren Lenkwinkel und dem aktuellen Lenkwinkel gebildet. Diese Differenz ist der kurvenbereinigte Lenkwinkel.

Im Schritt 110 wird verglichen, ob der Absolutwert des kurvenbereinigten Lenkwinkels größer als ein Toleranzwert ist, d.h. "Abs (kurvenbereinigter Lenkwinkel)>Toleranz-Wert". Ein Fahrer wird das Lenkrad beim Fahren stets etwas hin und her drehen ohne hierdurch lenken zu wollen.

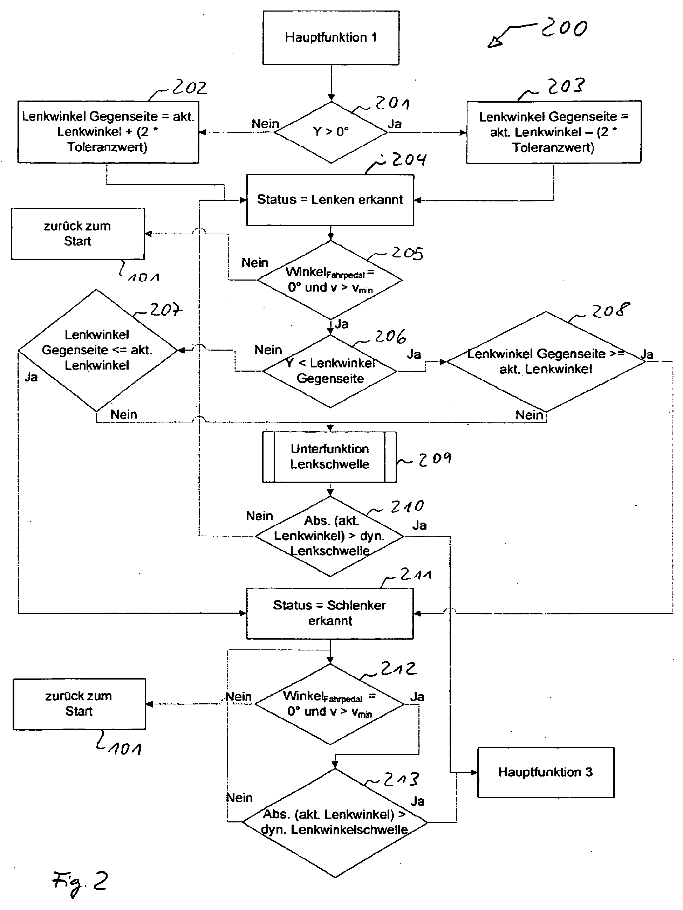

Falls nein, wird im Schritt 111 überprüft, ob das Gas- bzw. Fahrpedal nicht ausgelenkt und die Geschwindigkeit des Fahrzeugs größer als eine vorbestimmte Minimal-Geschwindigkeit ist. Falls ja, befindet sich das Fahrzeug im Status 109. Falls nein, beginnt das Verfahren erneut mit dem Status 101 "Start". Ist das Ergebnis des Schritts 110 "ja", wird der aktuelle Lenkwinkel y im Status 112 festgehalten und es wird davon ausgegangen, dass der erste Teil eines "Schlenkers" vom Fahrer herbeigeführt worden sein könnte. Nachfolgend geht es mit der in Figur 2 dargestellten Hauptfunktion 2 weiter.

Figur 2 zeigt den zweiten Teil 200 (Hauptfunktion 2) des erfindungsgemäßen Verfahrens. Im zweiten Teil 200 wird in den Schritten 201 bis 211 ermittelt, ob der Fahrer einen "Schlenker" fährt oder nicht, was ggf. ein weiteres Indiz für einen bevorstehenden Wendevorgang ist. Viele - aber nicht alle - Fahrer fahren vor einem Wendevorgang einen Schlenker.

Was unter dem Begriff "Schlenker" zu verstehen ist, soll zunächst für den Fall einer geraden Strasse erläutert werden. Folgt der Fahrer dem geraden Straßenverlauf bleibt das Lenkrad weitgehend in seiner Ruhestellung. Bei einer ersten Form des Schlenkers wird zunächst nach rechts deutlich über die Ruhestellung des Lenkrads hinaus und dann nach links deutlich über die Ruhestellung hinaus gelenkt. Hierbei gelangt der Fahrer bei Rechtsverkehr an den rechten Fahrbahnrand und die Front des Fahrzeugs zeigt bereits etwas mehr in die Gegenrichtung als bei der Geradeausfahrt. Bei einer zweiten Form eines Schlenkers lenkt der Fahrer zunächst nach links deutlich über die Ruhestellung des Lenkrads hinaus, dann nach rechts deutlich über die Ruhestellung hinaus.

Wird ein Schlenker gefahren, wenn sich das Fahrzeug beispielsweise auf einer Linkskurve bewegt, bewegt sich die Fahrbahn sozusagen unter dem Fahrzeug nach links - im Unterschied zu einer geraden Strasse. Während der normalen Kurvenfahrt ist das Lenkrad entsprechend der Krümmung der Kurve ggü. der 0-Lage verdreht, d.h. der Lenkwinkel ist bei einer Linkskurve kleiner als 0 Grad und bei einer Rechtskurve größer als 0 Grad.

Um auch bei einer Kurvenfahrt einen Schlenker erkennen zu können, wird im Schritt 201 überprüft, ob der Lenkwinkel y größer als 0 Grad ist. Falls nein, gilt Lenkwinkel Gegenseite = Lenkwinkel + (2 * Toleranzwert), d.h. der Status 202. Falls ja, gilt Lenkwinkel Gegenseite = Lenkwinkel - (2 * Toleranzwert), d.h. der Status 203. In beiden Fällen gilt der "Status = Lenken erkannt" 204.

Im Schritt 205 wird erneut überprüft, ob das Fahrpedal nicht ausgelenkt ist und ob die Geschwindigkeit größer als die vorbestimmte Minimal-Geschwindigkeit ist. Falls nein, beginnt das erfindungsgemäße Verfahren erneut mit "Start", d.h. mit Status 101.

Falls ja, wird im Schritt 206 überprüft, ob der aktuelle Lenkwinkel y kleiner als der "Lenkwinkel Gegenseite" (vgl. Status 202 und 203) ist. Falls nein, wird im Schritt 207 überprüft, ob der Lenkwinkel Gegenseite kleiner als oder gleich dem aktuellen Lenkwinkel ist. Falls ja, gilt dies als Schlenker, wie im Status 211 "Schlenker erkannt" angegeben.

Falls ja, wird im Schritt 208 überprüft, ob der "Lenkwinkel Gegenseite" größer als oder gleich dem aktuellen Lenkwinkel ist. Falls ja, gilt dies als Schlenker, wie im Status 211 angegeben. Ist das Ergebnis des Vergleichs im Schritt 207 oder 208 "Nein" wird die Unterfunktion "Lenkschwelle" 209 im Rahmen des erfindungsgemäßen Verfahrens durchschritten.

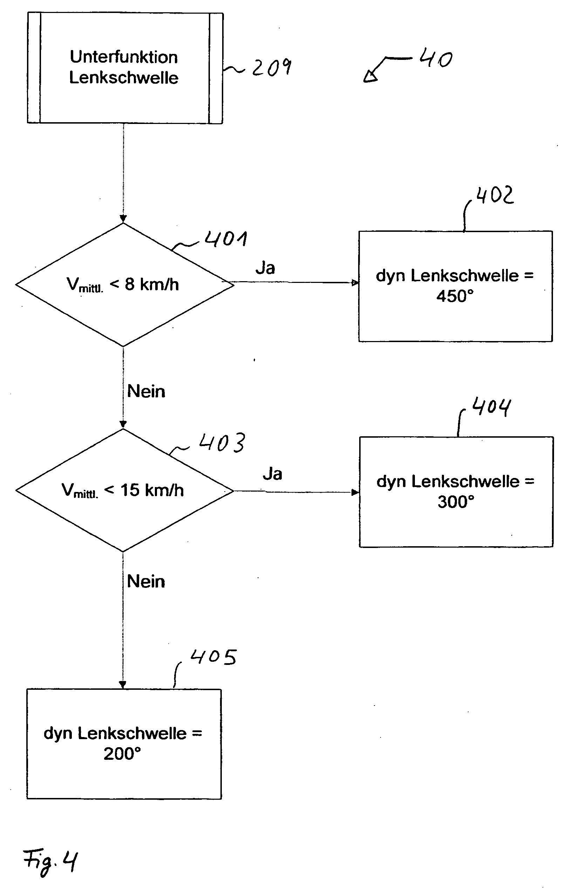

Figur 4 zeigt die Unterfunktion "Lenkschwelle" 400 des erfindungsgemäßen Verfahrens bei der eine geschwindigkeitsabhängige und damit dynamische Lenkschwelle für die weiteren Verfahrensschritte vorgegeben wird. Im Schritt 401 wird überprüft, ob die über einen bestimmten Zeitraum gemittelte Geschwindigkeit des Fahrzeugs kleiner als 8 km/h ist. Der Zeitraum kann beispielsweise zwischen 3 und 10 Sekunden betragen. Falls ja, wird die dynamische Lenkschwelle mit 450 Grad (Status 402) festgesetzt. Beim Geradeauslauf des Fahrzeugs, d.h. bei einem nicht aus dieser Position ausgelenkten Lenkrad beträgt der Winkel 0 bzw. 360 Grad. Falls nein, wird im Schritt 403 überprüft, ob die mittlere Geschwindigkeit des Fahrzeugs kleiner als 15 km/h ist, d.h. in Kombination mit dem Schritt 401, ob die mittlere Geschwindigkeit zwischen 8 km/h und 15 km/h liegt. Falls ja, wird die dynamische Lenkschwelle mit 300 Grad festgesetzt (Status 404). Falls nein, d.h. ist die Geschwindigkeit größer als 15 km/h, wird die dynamische Lenkschwelle mit 200 Grad festgesetzt.

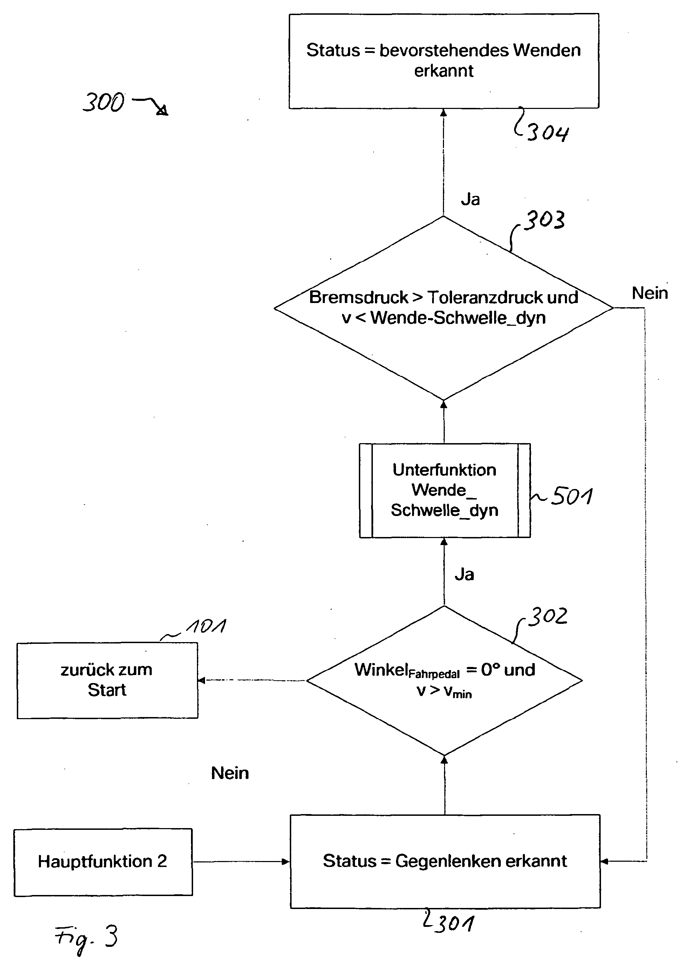

Im Schritt 210 wird überprüft, ob der Absolutwert des aktuellen Lenkwinkels größer als die dynamische Lenkschwelle für die aktuelle Fahrzeuggeschwindigkeit ist. Falls nein, beginnt das Verfahren erneut mit dem Status 204, d.h. "Lenken erkannt". Falls ja, wird das erfindungsgemäße Verfahren mit der Hauptfunktion 3 in Figur 3 fortgesetzt.

Gilt ein Schlenker als erkannt (Schritt 211) wird im Schritt 212 erneut überprüft, ob das Fahr- bzw. Gaspedal nicht betätigt ist (Winkel = 0 Grad) und ob die Geschwindigkeit größer als die vorbestimmte Minimal-Geschwindigkeit ist. Falls nein, beginnt das erfindungsgemäße Verfahren erneut mit "Start", d.h. ab dem Status 101. Falls ja, wird im Schritt 213 überprüft, ob der Absolutwert des aktuellen Lenkwinkels größer als die dynamische Lenkwinkelschwelle ist. Falls nein, wird der Vergleich im Schritt 212 wiederholt. Falls ja, liegt der Status "Gegenlenken erkannt" 301 vor und das Verfahren wird mit der in Figur 3 dargestellten Hauptfunktion 3 fortgesetzt.

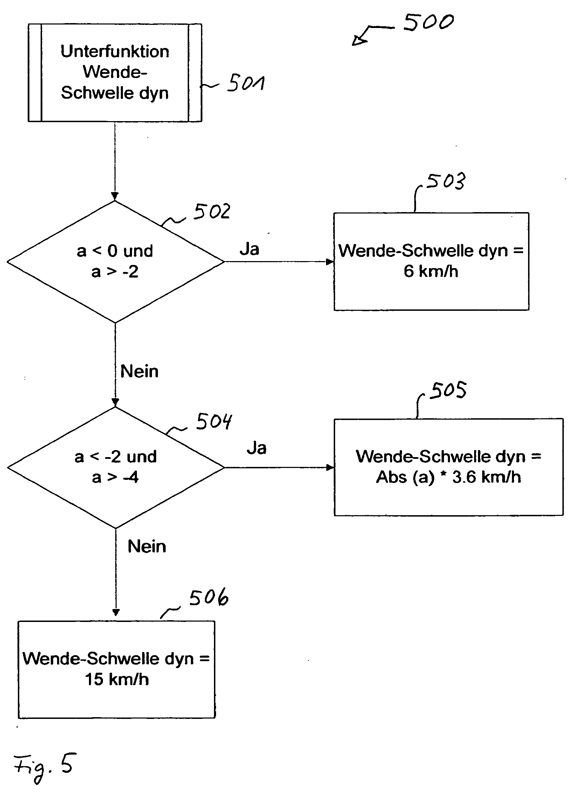

Im dritten Teil des erfindungsgemäßen Verfahrens, der in Figur 3 dargestellt ist, wird nun im Schritt 302 wiederum überprüft, ob das Gas- bzw. Fahrpedal nicht betätigt ist und ob die Geschwindigkeit des Fahrzeugs größer als die vorbestimmte Minimal-Geschwindigkeit ist. Falls nein, beginnt das Verfahren erneut mit "Start", d.h. ab Schritt 101. Falls ja, wird die in Figur 5 dargestellte Unterfunktion "Dynamische Wendeschwelle" 501 durchlaufen.

Bei der in Figur 5 dargestellten Unterfunktion "Dynamische Wendeschwelle" 501 wird im Schritt 502 überprüft, ob die über die letzten Sekunden gemittelte negative Beschleunigung des Fahrzeugs zwischen 0 m/s² und - 2 m/s² ist. Falls ja, wird die dynamische Wendeschwelle im Schritt 503 mit dem Wert 6 km/h festgelegt. Falls nein, wird im Schritt 504 überprüft, ob die negative Beschleunigung zwischen - 2 m/s² und - 4m/s² ist. Falls ja, wird die dynamische Wendeschwelle im Schritt 505 auf den Wert: Absolutwert der Beschleunigung mal Faktor 3,6 festgesetzt. Das Ergebnis ist ein Geschwindigkeitswert. Falls nein, wird die dynamische Wendeschwelle im Schritt 506 auf den Wert 15 km/h festgesetzt.

Nach dem Schritt 501 wird in dem in Figur 3 dargestellten Schritt 303 überprüft, ob der Bremsdruck höher als ein vorbestimmter Toleranz-Bremsdruck ist. Zudem wird überprüft, ob die aktuelle Geschwindigkeit des Fahrzeugs v kleiner als die bei der Unterfunktion "dynamische Wendeschwelle" festgesetzte dynamische Wendeschwelle ist. Falls nein, beginnt das erfindungsgemäße Verfahren erneut mit dem Schritt 301 in Figur 3.

Falls ja, gilt im Schritt 304 der "Status bevorstehendes Wenden erkannt". Mit dem Schritt 304 wird die Leerlaufdrehzahl des Verbrennungsmotors von einer ersten Leerlaufdrehzahl auf eine zweite ggü. der ersten Leerlaufdrehzahl höhere Leerlaufdrehzahl durch eine entsprechende Vorgabe an das Motor-Steuergerät des Verbrennungsmotors angehoben. Dies geschieht vor dem tatsächlichen Wendemanöver. Beim Wendevorgang steht der elektrischen Lenkung des Kraftfahrzeugs dann eine ausreichend hohe elektrische Spannung und/oder elektrische Leistung zur Verfügung und eine ansonsten vorhandene für den Fahrer unangenehme Schwergängigkeit der Lenkung tritt aufgrund des erfindungsgemäßen Verfahrens nicht auf. Nachdem der Wendevorgang abgeschlossen oder voraussichtlich abgeschlossen worden ist, wird die Leerlaufdrehzahl wieder auf die erste ggü. der zweiten Leerlaufdrehzahl niedrigere Leerlaufdrehzahl abgesenkt. Die Beendigung des Wendevorgangs kann beispielsweise von der Fahrsituations-Erfassungseinrichtung überwacht und erkannt werden. Ein Kriterium kann beispielsweise sein, dass der Fahrer bereits wieder eine Zeit lang geradeaus fährt oder dass das Fahrzeug eine vorbestimmte Geschwindigkeit erreicht hat. Ebenso kann vorgesehen sein, dass der Wendevorgang nach einer vorbestimmten Zeit nach dem Schritt 304 als abgeschlossen gilt.

Es versteht sich, dass die Erfindung auch in einer verschlechterten Ausführungsform ausgeführt werden kann, bei der die Leerlaufdrehzahl bereits früher im Verlauf des erfindungsgemäßen Verfahrens erhöht wird. Ggf. steigt dann aber das Risiko eines "Fehlalarms", d.h. die Erhöhung der Leerlaufdrehzahl erfolgt dann mitunter ohne tatsächlichen späteren Bedarf.

## Patentansprüche

1. Verfahren zur Reduzierung des Energieverbrauchs eines Kraftfahrzeugs mit einem Verbrennungsmotor und mit mindestens einem elektrischen Bordnetz an das mindestens ein erster elektrischer Verbraucher angeschlossen ist, wobei
- der Verbrennungsmotor in einem ersten Betriebszustand mit einer ersten Drehzahl betrieben wird, und
- der Verbrennungsmotor in einem zweiten Betriebszustand mit einer zweiten gegenüber der ersten Drehzahl höheren Drehzahl betrieben wird, **dadurch gekennzeichnet,**
- **dass** eine im Fahrzeug vorgesehene Fahrsituations-Erfassungseinrichtung eine unmittelbar bevorstehende besondere Fahrsituation (304) aufgrund des bisherigen Verhaltens des Fahrers (102, 104, 105, 107, 108, 110, 111, 201, 205, 206, 210, 212, 213, 302, 303, 401, 403) beim Steuern des Fahrzeugs und/oder des Fahrzeugs im Voraus erkennt und veranlasst, dass der Verbrennungsmotor vom ersten Betriebszustand in den zweiten Betriebszustand gebracht wird, und
- der erste elektrische Verbraucher eine elektrisch betätigte Lenkung des Kraftfahrzeugs und die unmittelbar bevorstehende besondere Fahrsituation (304) ein Wendevorgang ist, wobei die Stellung des Fahr- bzw. Gaspedals von der Fahrsituations-Erfassungseinrichtung zur Ermittlung eines Wendevorgangs erfasst wird, und der Verbrennungsmotor vom ersten Betriebszustand in den zweiten Betriebszustand gebracht wird, wenn sich das Fahr- bzw. Gaspedal weitgehend in seiner Ruhestellung (104, 108, 111, 205, 212, 302) befindet, die Beschleunigung des Fahrzeugs negativ ist und die Geschwindigkeit einen vorbestimmten Schwellenwert unterschreitet.

2. Verfahren nach Anspruch 1, **dadurch gekennzeichnet, dass** die Fahrsituations-Erfassungseinrichtung beim Betrieb des Verbrennungsmotors im zweiten Betriebszustand dessen Drehzahl mit einer vorbestimmten Soll-Drehzahl vergleicht und bei Unterschreitung der Soll-Drehzahl veranlasst, dass die Drehzahl des Verbrennungsmotors mindestens auf die Soll-Drehzahl angehoben wird.

3. Verfahren nach Anspruch 1, **dadurch gekennzeichnet, dass** die Fahrsituations-Erfassungseinrichtung berücksichtigt, wer der aktuelle Fahrer ist und wie sein früheres Verhalten war, wobei der aktuelle Fahrer anhand des von ihm verwendeten Fahrzeugschlüssels erkannt wird.

4. Verfahren nach einem der vorstehenden Ansprüche, **dadurch gekennzeichnet, dass** der Lenkwinkel der elektrischen Lenkung des Fahrzeugs von der Fahrsituations-Erfassungseinrichtung erfasst wird, und die Verbrennungsmaschine vom ersten Betriebszustand in den zweiten Betriebszustand gebracht wird, wenn der Absolutwert des Lenkwinkels größer als ein vorbestimmter Schwellenwert ist eintritt.

5. Verfahren nach einem der vorstehenden Ansprüche, **dadurch gekennzeichnet, dass** der Lenkwinkel der elektrischen Lenkung des Fahrzeugs von der Fahrsituations-Erfassungseinrichtung erfasst wird, und die Verbrennungsmaschine vom ersten Betriebszustand in den zweiten Betriebszustand gebracht wird, wenn der Absolutwert des Lenkwinkels größer als eine vorbestimmte geschwindigkeitsabhängige Lenkschwelle bzw. Lenkwinkelschwelle ist (210, 213).

6. Verfahren nach einem der vorstehenden Ansprüche, **dadurch gekennzeichnet, dass** die Fahrsituations-Erfassungseinrichtung überprüft, ob der Bremsdruck höher als ein vorbestimmter Bremsdruck bzw. ein Toleranzdruck ist und zudem überprüft, ob die Geschwindigkeit kleiner als ein vorbestimmter beschleunigungsabhängiger Geschwindigkeitswert ist (303, 502, 503, 504, 505).

7. Bordnetz eines Kraftfahrzeugs, **dadurch gekennzeichnet, dass** das Bordnetz eine programmgesteuerte Fahrsituations-Erfassungseinrichtung aufweist, die ein Verfahren nach einem der vorstehenden Ansprüche ausführt.

8. Programmgesteuerte Fahrsituations-Erfassungseinrichtung, **dadurch gekennzeichnet, dass** die Fahrsituations-Erfassungseinrichtung ein Verfahren nach einem der Ansprüche 1 bis 6 ausfürht oder deren Ausführung veranlasst.

## Claims

1. A method for reducing the energy consumption of a motor vehicle having an internal combustion engine and at least one vehicle electric system to which at least a first electrical consumer is connected, wherein
- in a first operating mode, the internal combustion engine is operated at a first speed, and
- in a second operating mode, the internal combustion engine is operated at a second speed which is higher than the first speed,
**characterised in that**
- a driving situation detection device, provided in the vehicle, detects in advance a particular imminent driving situation (304) based on the driver's previous behaviour (102, 104, 105, 107, 108, 110, 111, 201, 205, 206, 210, 212, 213, 302, 303, 401, 403) in controlling the vehicle and/or based on the previous behaviour of the vehicle and causes the internal combustion engine to be brought out of the first operating mode into the second operating mode, and
- the first electrical consumer is an electrically actuated steering system of the motor vehicle and the particular imminent driving situation (304) is a turning procedure, the position of the accelerator or throttle being detected by the driving situation detection device to determine a turning procedure, and the internal combustion engine is brought out of the first operating mode into the second operating mode if the accelerator or throttle is substantially in its idle position (104, 108, 111, 205, 212, 302), if the acceleration of the vehicle is negative and if the speed falls below a predetermined threshold value.

2. A method according to claim 1, **characterised in that** during operation of the internal combustion engine in the second operating mode, the driving situation detection device compares the speed of said engine with a predetermined set speed and, if the speed falls below the set speed, it causes the speed of the internal combustion engine to be increased to at least the set speed.

3. A method according to claim 1, **characterised in that** the driving situation detection device factors into consideration the identity of the current driver and the nature of the driver's previous behaviour, the current driver being recognised on the basis of the vehicle key being used.

4. A method according to any one of the previous claims, **characterised in that** the steering angle of the electrical steering system of the vehicle is detected by the driving situation detection device, and the internal combustion engine is brought out of the first operating mode into the second operating mode if the absolute value of the steering angle is greater than a predetermined threshold value.

5. A method according to any one of the preceding claims, **characterised in that** the steering angle of the electrical steering system of the vehicle is detected by the driving situation detection device, and the internal combustion engine is brought out of the first operating mode into the second operating mode if the absolute value of the steering angle is greater than a predetermined speed-dependent steering threshold or steering angle threshold (210, 213).

6. A method according to any one of the preceding claims, **characterised in that** the driving situation detection device checks whether the brake pressure is greater than a predetermined brake pressure or a tolerance pressure and also checks whether the speed is lower than a predetermined acceleration-dependent speed value (303, 502, 503, 504, 505).

7. An electrical system of a motor vehicle, **characterised in that** the vehicle electrical system has a program-controlled driving situation detection device which implements a method according to any one of the preceding claims.

8. A program-controlled driving situation detection device, **characterised in that** the driving situation detection device implements a method according to any one of claims 1 to 6 or initiates the implementation thereof.

## Revendications

1. Procédé permettant de réduire la consommation en énergie d'un véhicule équipé d'un moteur à combustion interne et d'au moins un réseau électrique embarqué sur lequel est branché au moins un premier consommateur électrique, selon lequel
le moteur à combustion interne est entraîné avec une première vitesse de rotation dans un premier état de fonctionnement, et
le moteur à combustion interne est entraîné avec une seconde vitesse de rotation plus élevée que la première vitesse de rotation dans un premier état de fonctionnement,
**caractérisé en ce qu'**
un dispositif de détection de la situation de conduite monté dans le véhicule reconnaît à l'avance, une situation de conduite particulière (304) immédiatement imminente sur le fondement du comportement actuel du conducteur (102, 104, 105, 107, 108, 110, 111, 201, 205, 206, 210, 212, 213, 302, 303, 401, 403), lors de la commande du véhicule et/ou du véhicule, et demande que le moteur à combustion interne soit transféré du premier état de fonctionnement dans le second état de fonctionnement, et
le premier consommateur électrique est une direction à actionnement électrique du véhicule, et la situation de conduite particulière immédiatement imminente (304) est un processus de changement de direction, la position de la pédale d'accélérateur ou la pédale des gaz étant détectée par le dispositif de détection de la situation de conduite pour déterminer un processus de changement de direction, et le moteur à combustion interne étant transféré du premier état de fonctionnement dans le second état de fonctionnement lorsque la pédale d'accélérateur ou la pédale des gaz se trouve essentiellement dans sa position de repos (104, 108, 111, 205, 212, 302), que l'accélération du véhicule est négative et que la vitesse passe au dessous d'une valeur de seuil prédéfinie.

2. Procédé conforme à la revendication 1,
**caractérisé en ce que**
lors du fonctionnement du moteur à combustion interne dans le second état de fonctionnement, le dispositif de détection de la situation de conduite compare sa vitesse de rotation avec une vitesse de rotation de consigne prédéfinie, et demande, lorsque la vitesse de rotation du moteur passe au dessous de la vitesse de rotation de consigne, que cette vitesse soit augmentée au moins au niveau de la vitesse de rotation de consigne.

3. Procédé conforme à la revendication 1,
**caractérisé en ce que**
le dispositif de détection de la situation de conduite prend en considération qui est le conducteur actuel et comment était son comportement antérieur, le conducteur actuel étant reconnu sur le fondement de la clé du véhicule qu'il utilise.

4. Procédé conforme à l'une des revendications précédentes,
**caractérisé en ce que**
l'angle de braquage de la direction électrique du véhicule est détecté par le dispositif de détection de la situation de conduite, et le moteur à combustion interne est transféré du premier état de fonctionnement dans le second état de fonctionnement lorsque la valeur absolue de l'angle de braquage devient supérieure à une valeur de seuil prédéfinie.

5. Procédé conforme à l'une des revendications précédentes,
**caractérisé en ce que**
l'angle de braquage de la direction électrique du véhicule est détecté par le dispositif de détection de la situation de conduite et le moteur à combustion interne est transféré du premier état de fonctionnement dans le second état de fonctionnement lorsque la valeur absolue de l'angle de braquage est supérieure à un seuil de braquage ou à un seuil d'angle de braquage (210, 213) dépendant de la vitesse prédéfinie.

6. Procédé conforme à l'une des revendications précédentes,
**caractérisé en ce que**
le dispositif de détection de la situation de conduite vérifie si la pression de freinage est supérieure à une pression de tolérance ou à une pression de freinage prédéfinie et vérifie en outre si la vitesse est inférieure à une valeur de vitesse prédéfinie (303, 502, 503, 504, 505) dépendant de l'accélération.

7. Réseau embarqué sur un véhicule,
**caractérisé en ce que**
le réseau embarqué comprend un dispositif de détection de la situation de conduite commandé par un programme qui exécute un procédé conforme à l'une des revendications précédentes.

8. Dispositif de détection d'une situation de conduite commandée par un programme,
**caractérisé en ce que**
le dispositif de détection de la situation de conduite exécute un procédé conforme à l'une des revendications 1 à 6 ou permet son exécution.
